**Europäisches Patentamt**

**European Patent Office**

**Office européen des brevets**

(19)

(11) Veröffentlichungsnummer: **0 285 818 B1**

## (12) EUROPÄISCHE PATENTSCHRIFT

(45) Veröffentlichungstag der Patentschrift: **29.05.91**

(51) Int. Cl.5: **F16C 11/04**, F16C 11/06

(21) Anmeldenummer: **88103340.1**

(22) Anmeldetag: **04.03.88**

(54) **Selbstnachstellendes Drehzapfengelenk mit Axialspiel für Kraftfahrzeuge.**

(30) Priorität: **09.04.87 DE 3711971**

(43) Veröffentlichungstag der Anmeldung:
**12.10.88 Patentblatt 88/41**

(45) Bekanntmachung des Hinweises auf die
Patenterteilung:
**29.05.91 Patentblatt 91/22**

(84) Benannte Vertragsstaaten:
**ES FR GB IT SE**

(56) Entgegenhaltungen:
**DE-A- 1 816 835**
**US-A- 1 909 100**
**US-A- 3 369 848**
**US-A- 4 101 227**

(73) Patentinhaber: **Lemförder Metallwaren AG**
**Postfach 1220**
**W-2844 Lemförde(DE)**

(72) Erfinder: **Buhl, Reinhard, Dipl.-Ing**
**Eichendorffstrasse 9**
**W-4508 Bohmte(DE)**

(74) Vertreter: **Bruse, Willy Hans Heinrich**
**Edisonstrasse 14**
**W-2800 Bremen 33(DE)**

**Beschreibung**

Die Erfindung betrifft ein selbstnachstellendes Drehzapfengelenk mit Axialspiel für Kraftfahrzeuge, welches die Gattungsmerkmale nach dem Oberbegriff des Patentanspruches 1 aufweist.

Ein solches Drehzapfengelenk ist aus der US-A- 4 101 227 bekannt. Es handelt sich um spezielle Führungsgelenke für Fahrwerksteile oder dergleichen in Kraftfahrzeugen, die radial spielfrei pendelnd oder in vergleichbarer Weise drehbeweglich, aber gleichzeitig axial im Abstand voneinander veränderbar miteinander verbunden sein müssen. Die konische Lagerung der Lagerschale in der konischen Gehäuseausbildung mit der zwischen einem Gehäusedeckel und der an die Konusbasis angrenzenden Lagerschalenstirnfläche vorgespannten Schraubenfeder sorgt selbsttätig für eine Nachstellung bei Verschleiß, so daß kein Radialspiel entstehen kann. Damit der Drehzapfen nicht axial aus der Lagerschale herausfällt, weist der Drehzapfen an seinem freien Ende einen nach außen vorspringenden Bund auf, und ist der Drehzapfen mit seinem für die Teilebefestigung bestimmten Gewindezapfen voraus in einen an der Rückseite offenen Gehäuserohling eingesetzt, dessen offene Seite anschließend mittels eines Deckels verschlossen ist, den ein Bördelrand festhält und zwischen sich und der Lagerschale die erwähnte Feder vorspannt, so daß der Bund am Drehzapfen zwischen dem Deckel und der diesem zugewandten Stirnfläche der Lagerschale axial beweglich ist. Dadurch wird das erforderliche Axialspiel definiert und gleichzeitig eine Verliersicherung für den Drehzapfen erreicht. Die Druckschrift zeigt eine Ausbildung, bei der der Drehzapfen am freien Ende einen gegenüber dem Durchmesser des Drehzapfens dünneren Ansatz trägt, dessen Stirnfläche am freien Ende zusammen mit der Innenfläche des Deckels Anschläge für die Begrenzung des Axialspiels bilden.

Aufgabe der Erfindung ist die Verwirklichung einer kostenseitig günstiger herstellbaren Ausbildung eines solchen Drehzapfengelenks, welches auch die Anwendung bei Gelenken mit einem an der Vorderseite offenen Gehäuse ermöglicht.

Die Erfindung löst diese Aufgabe durch Ausbildungsmerkmale nach dem Kennzeichen des Patentanspruches 1.

Hiernach wird die Verliersicherung des Drehzapfens durch seine Umfangsausnehmung in Verbindung mit dem Vorsprung im Innern der Lagerschale erreicht, die in die Umfangsausnehmung eingreift. Gleichzeitig wird erreicht, daß die Axialbewegung des Drehzapfens gegenüber dem Gehäuse nicht abrupt durch Anschläge begrenzt wird, so daß axiale Stoßbelastungen zwischen dem Drehzapfen und dem Gehäuse nicht auftreten können. Im Rahmen der Beweglichkeit des Vorsprunges in der Umfangsausnehmung in Richtung der Längsachse des Drehzapfens ist auch dieser innerhalb des Gehäuses axial beweglich. Wesentlicher Vorteil dieser Ausbildung ist die Möglichkeit der Herstellung des Drehzapfens aus einem zylindrischen Stabrohling, wodurch eine erhebliche Kostenersparnis gegenüber dem Drehzapfen nach dem Stande der Technik erreicht wird, welcher durch Pressen oder in anderer Weise durch Materialverformung hergestellt ist. Die Anordnung des Vorsprunges im Innern der Lagerschale verteuert deren Herstellung demgegenüber nicht nennenswert. Bevorzugt wird eine Umfangsausnehmung mit einem flachen Boden, der sich achsparallel zur Lagerfläche des Drehzapfens erstreckt und in den ein innerer Vorsprung der Lagerschale eingreift, welcher als umlaufende Rippe bzw. Wulst ausgebildet ist. Diese Rippe oder Wulst kann mit der Lagerschale aus dem gleichen Werkstoff einstückig hergestellt werden.

Von besonderem Vorteil ist aber auch die Möglichkeit, daß ein mit den Merkmalen nach der Erfindung ausgebildeter Drehzapfen mit seinem Lagerende voran von der offenen Gehäuseseite her in das Gehäuse eingesetzt werden kann, so daß das Gehäuse mittels eines den Schaft des Drehzapfens umschließenden Verschlußringes verschlossen wird. Solche Lagerausbildungen sind an sich bekannt und werden für manche Anwendungsfälle bevorzugt. Die Erfindungsmerkmale ermöglichen nunmehr auch die Verwendung dieses Lagertyps für spezielle Drehzapfengelenke der erfindungsgemäßen Gattung.

Auf der Zeichnung sind zwei Ausführungsbeispiele der Erfindung jeweils zur Hälfte in Seitenansicht und zur Hälfte im axialen Längsschnitt dargestellt.

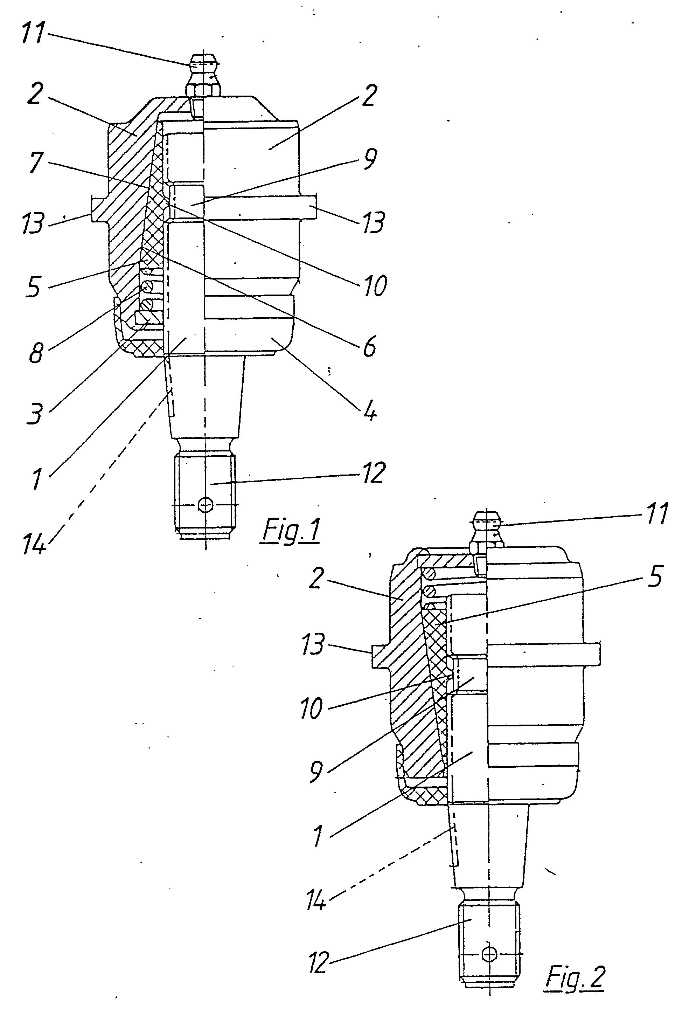

Das Ausführungsbeispiel in Figur 1 zeigt eine bevorzugte Ausführungsform, bei der der Drehzapfen 1 mit seinem Lagerende voran von der offenen Vorderseite her in das Gehäuse 2 eingesetzt ist, für dessen Verschluß ein Verschlußring 3 Verwendung findet, der den Schaft des Drehzapfens 1 umschließt und durch einen Bördelrand in herkömmlicher Weise gehalten ist. Eine Dichtungsmanschette 4 verhindert das Eindringen von Staub oder dergleichen Verunreinigungen in das Innere des Drehzapfenlagers. Innerhalb des Gehäuses 2 ist das zylindrische freie Ende des Drehzapfens 1 in einer in Längsrichtung in an sich bekannter Weise geschlitzten Lagerschale 5 mit einer zylindrischen Innenmantelfläche gelagert. Die Außenmantelfläche 6 der Lagerschale 5 ist konisch ausgebildet und mit dieser konischen Ausbildung in eine Ausnehmung des Gehäuses 2 eingesetzt, die eine entsprechend konische Innenmantelfläche 7 aufweist. Zwischen der Stirnfläche der Lagerschale 5 an der Basis der konischen Mantelflächen 6 und 7 und der Innenfläche des Verschlußringes 3 ist eine Schraubenfeder 8 vorgespannt, die die Lagerschale 5 in Richtung zur Konusspitze hin belastet. Dadurch wird erreicht, daß ein eventuell entstehendes Radialspiel ständig ausgeglichen wird, um radial Spielfreiheit zu erreichen. Im Bereich der Lagerung innerhalb der Lagerschale 5 ist das zylindrische Ende des Drehzapfens 1 mit einer Umfangsausnehmung 9 versehen, die sich mit einer gewissen Breite in axialer Richtung des Drehzapfens erstreckt und in die ein innerer Vorsprung 10 der Lagerschale 5 eingreift, welcher im Falle des Beispieles als umlaufende Rippe oder Wulst ausgebildet ist. Diese Rippe oder Wulst weist eine gegenüber der Ausnehmung 9 geringere Breite auf, so daß der Drehzapfen 1 in axialer Richtung entsprechend beweglich ist. Das Lager kann dauerhaft mit Schmierfett angefüllt sein, jedoch ist auch eine fortlaufende Nachschmierung über einen gegebenenfalls vorgesehenen Schmiernippel 11 möglich. Das aus dem Gehäuse 2 herausragende Ende des Drehzapfens 1 ist für die Teileverbindung mit einem Gewindezapfen 12 versehen. Die Teileverbindung des Gehäuses 2 kann oberhalb oder unterhalb des äußeren Bundes 13 am Gehäuse 2, z.B. durch Aufpressen, erfolgen.

Das Beispiel nach Figur 2 ist in Anlehnung an den Stand der Technik in der Weise gestaltet, daß der Drehzapfen 1 mit dem Gewindeende 12 voran in ein Gehäuse 2 eingesetzt ist, welches an der Rückseite offen und nach dem Einsetzen des Drehzapfens 1 durch einen Verschlußdeckel 3a verschließbar ist. Im übrigen weist aber auch dieses Beispiel die Ausbildungsmerkmale der Erfindung auf, wie sie zu Figur 1 erläutert wurden.

Zur Erhöhung der Lebensdauer kann der Drehzapfen 1 wenigstens im Bereich seiner Lagerung innerhalb der Lagerschale 5 an der Oberfläche gehärtet sein, wie dies in der Zeichnung mit der unterbrochenen Linie 14 angedeutet ist.

## Ansprüche

1. Selbstnachstellendes Drehzapfengelenk mit Axialspiel für Kraftfahrzeuge, bestehend aus einem Gehäuse (2) und aus einem darin einseitig mittels einer in ihrer Längsrichtung geschlitzten Lagerschale (5) aus einem elastisch verformbaren Werkstoff drehbar gelagerten Drehzapfen (1), wobei die außen konische Lagerschale in eine entsprechend konische Ausnehmung (7) des Gehäuses eingesetzt und darin in Richtung zur Konusspitze hin mittels einer zwischen der Lagerschale einerseits und einem Verschlußteil (3) des Gehäuses andererseits vorgespannten Feder (8) belastet ist, dadurch gekennzeichnet, daß der Drehzapfen (1) eine sich mit ihrer Breite in Richtung der Längsachse des Drehzapfens ausdehnende Umfangsausnehmung (9) und die Lagerschale (5) einen inneren, in diese Umfangsausnehmung eingreifenden Vorsprung (10) aufweist, dessen Breite jedoch geringer bemessen ist als die Breite der Umfangsausnehmung.

2. Drehzapfengelenk nach Anspruch 1, dadurch gekennzeichnet, daß der Drehzapfen (1) eine Umfangsausnehmung (9) mit einem flachen, sich achsparallel zur Lagerfläche am Drehzapfen (1) erstreckenden Boden aufweist.

3. Drehzapfengelenk nach Anspruch 1, dadurch gekennzeichnet, daß der innere Vorsprung (10) der Lagerschale (5) als umlaufende Rippe oder Wulst ausgebildet ist.

4. Drehzapfengelenk nach den Ansprüchen 1 und 3, dadurch gekennzeichnet, daß die innere Rippe (10) oder Wulst mit der Lagerschale (5) aus dem gleichen Werkstoff einstückig ausgebildet ist.

5. Drehzapfengelenk nach den Ansprüchen 1 bis 4, dadurch gekennzeichnet, daß der Drehzapfen (1) mit seinem Lagerende voran von der offenen Gehäuseseite her in das Gehäuse (2) eingesetzt und das Gehäuse mittels eines den Schaft des Drehzapfens umschließenden Verschlußringes (3) geschlossen ist.

## Claims

1. Self-adjusting pivot joint with axial play for motor vehicles, consisting of a housing (2) and a pivot (1), which is rotatably mounted in the latter on one side by means of a bearing shell (5), which is split in its longitudinal direction and consists of an elastically deformable material, the outer conical bearing shell being inserted in a recess (7), of a corresponding conical shape, in the housing and loaded in this recess in the direction of the cone peak by means of a spring (8), which is preloaded between the bearing shell at one side and a locking part (3) of the housing at the other, characterised in that the pivot (1) comprises a peripheral recess (9), the width of which increases in the direction of the longitudinal axis of the pivot, and the bearing shell (5) comprises an inner projection (10), which engages in this peripheral recess and the width of which is however smaller than the width of the peripheral recess.

2. Pivot joint according to claim 1, characterised in that the pivot (1) comprises a peripheral recess (9) with a flat bottom, which extends axially parallel with the bearing surface on the pivot (1).

3. Pivot joint according to claim 1, characterised in that the inner projection (10) of the bearing shell (5) is formed as a circulating rib or bead.

4. Pivot joint according to claims 1 and 3, characterised in that the inner rib (10) or bead is formed in one piece with the bearing shell (5) from the same material.

5. Pivot joint according to claims 1 and 3, characterised in that the pivot (1) is inserted with its bearing end leading in the housing (2) from the open housing side, and the housing is closed by means of a locking ring (3) surrounding the shank of the pivot.

## Revendications

1. Articulation à pivot à jeu axial avec rattrapage de jeu automatique, pour véhicules automobiles, constituée d'un corps de palier (2) et d'un pivot (1) qui est monté à rotation par un côté dans le corps de palier à l'aide d'une coquille de coussinet (5) en matériau élastiquement déformable qui est fendue dans son sens longitudinal, la coquille de coussinet extérieurement conique étant introduite dans un évidement (7) de conicité correspondante du corps de palier, et étant sollicitée dans cet évidement, en direction de la pointe du cône, à l'aide d'un ressort (8) qui est précontraint entre d'une part la coquille de coussinet et d'autre part un élément de fermeture (3) du corps de palier, caractérisée en ce que le pivot (1) présente un évidement périphérique (9) dont la largeur s'étend en direction de l'axe longitudinal du pivot, et la coquille de coussinet (5) présente une saillie intérieure (10) qui s'engage dans cet évidement périphérique, mais dont la largeur est inférieure à celle de l'évidement périphérique.

2. Articulation à pivot selon la revendication 1, caractérisée en ce que le pivot (1) présente un évidement periphérique (9) doté d'un fond plat, s'étendant parallèlement à l'axe de la surface de montage du pivot (1).

3. Articulation à pivot selon la revendication 1, caractérisée en ce que la saillie intérieure (10) de la coquille de coussinet (5) est réalisé en forme de nervure entourante ou de bourrelet.

4. Articulation à pivot selon les revendications 1 et 3, caractérisée en ce que la nervure intérieure (10), ou le bourrelet, est réalisé(e) en une pièce avec la coquille de coussinet (5), dans le même matériau.

5. Articulation à pivot selon les revendications 1 à 4, caractérisée en ce que le pivot (1) est introduit dans le corps de palier (2) avec son extrémité de montage en avant, par le côté ouvert du corps de palier, et le corps de palier est fermé à l'aide d'une bague de fermeture (3) entourant l'arbre du pivot.

_Fig.1_

_Fig.2_